# FASCICULE DE BREVET EUROPEEN

(11) **EP 1 870 306 B1**
(45) Date de publication et mention de la délivrance du brevet: **06.09.2017**
(21) Numéro de dépôt: 07109511.1
(22) Date de dépôt: 04.06.2007
(51) Int. Cl.: B60T 13/569, B60T 13/567

(54) **Servomoteur à tirants comportant une bague d'étanchéité renforcée**
Bremskraftverstärker mit Zugstangen, die verstärkte Dichtungsringe umfassen
Servomotor with support struts comprising reinforced sealing rings

(30) Priorité: 21.06.2006 FR 0607600
(43) Date de publication de la demande: 26.12.2007
(73) Titulaire: ROBERT BOSCH GMBH, 70442 Stuttgart (DE)
(72) Inventeur: Raimbault, Fabrice, 94300 Vincennes (FR); Leboisne, Cédric, 94130 Nogent Sur Marne (FR)

(56) Documents cités:
- DE-A1- 10 334 457
- US-A- 5 410 880
- US-A1- 2003 089 224

## Description

L'invention concerne un servomoteur pneumatique d'assistance au freinage pour un véhicule automobile, dit servomoteur "à tirants".

L'invention concerne plus particulièrement un servomoteur pneumatique d'assistance au freinage pour un véhicule automobile, dit servomoteur "à tirants", du type qui comporte une enveloppe rigide d'orientation axiale à l'intérieur de laquelle est montée mobile une cloison sensiblement transversale délimitant de façon étanche une chambre avant, soumise à une première pression, et une chambre arrière, soumise à une deuxième pression variant entre la première pression et une pression supérieure à la première pression, qui est susceptible de solliciter une tige d'actionnement d'un maître cylindre associé au servomoteur, et dont les mouvements sont commandés par des clapets dits "d'admission" et de "rééquilibrage" permettant de faire varier la deuxième pression dans la chambre arrière, du type dans lequel la cloison mobile comporte au moins une coupelle dont au moins une partie annulaire est inclinée d'un angle déterminé par rapport à la direction axiale de l'enveloppe, dont une face déterminée est recouverte d'une membrane d'étanchéité liée à la périphérie intérieure de l'enveloppe, du type dans lequel le servomoteur est destiné à être fixé à un tablier d'un véhicule associé par l'intermédiaire de tirants d'orientation axiale traversant l'enveloppe du servomoteur et la partie annulaire de la cloison mobile, et du type dans lequel la coupelle comporte un perçage associé à chaque tirant qui reçoit une bague d'étanchéité qui est d'une part fixée à la coupelle et qui est d'autre part montée coulissante sur le tirant associé.

Il existe plusieurs types de fixations de servomoteurs, voir par exemple DE 103 34 457 A1. Selon une première conception connue, le servomoteur est fixé à une platine qui est elle-même fixée à un tablier du véhicule par l'intermédiaire de vis ou d'un autre moyen de fixation.

Selon une deuxième conception connue, le servomoteur est fixé directement sur le tablier du véhicule par l'intermédiaire de tirants qui traversent l'enveloppe du servomoteur. De tels servomoteurs présentent l'avantage de pouvoir être fixés facilement sur un tablier du véhicule et de présenter un poids réduit.

Par exemple, le tablier du véhicule peut être équipé de tirants soudés qui traversent le servomoteur, lequel est fixé au tablier par l'intermédiaire d'écrous serrés sur une face avant de l'enveloppe.

Inversement, les tirants peuvent être fixés à l'enveloppe du servomoteur et celui-ci est fixé par l'intermédiaire d'écrous qui sont serrés au dos du tablier du véhicule.

Dans ces les deux variantes de cette deuxième conception, la traversée du servomoteur par les tirants implique la mise en place d'une étanchéité poussée entre les tirants et la paroi mobile du servomoteur.

Conventionnellement, cette étanchéité est réalisée dynamiquement par l'intermédiaire d'une bague d'orientation parallèle à la direction axiale, qui est interposée entre chaque tirant et la paroi mobile, et qui est destinée à coulisser sur le tirant.

Par ailleurs, il est connu, pour des raisons de compacité, de proposer des servomoteurs dont au moins une partie annulaire de la paroi mobile est inclinée d'un angle déterminé par rapport à la direction axiale du servomoteur, sensiblement suivant un tronc de cône. Cette conception, offre une plus grande rigidité de la paroi mobile pour une même épaisseur. La bague d'étanchéité est alors généralement localisée dans la partie annulaire inclinée de la paroi mobile.

Or, dans ce dernier type de servomoteur, on a constaté que, du fait de l'inclinaison locale de la paroi mobile, la bague d'étanchéité est soumise à des écarts de pression radiale relativement élevés, ce qui peut provoquer un décollement local de la bague autour du tirant, et poser ainsi des problèmes d'étanchéité entre les chambres avant et arrière du servomoteur.

Pour remédier à cet inconvénient, l'invention propose un servomoteur comportant une bague d'étanchéité renforcée.

Dans ce but, l'invention propose un servomoteur du type décrit précédemment, caractérisé en ce que la coupelle comporte dans sa partie annulaire inclinée un élément tubulaire, qui comporte le perçage, et qui s'étend au moins axialement en partie autour de la bague d'étanchéité pour assurer une répartition plus uniforme des pressions autour de la bague d'étanchéité et limiter les déformations de ladite bague lorsqu'elle est soumise à une différence de pression entre les chambres avant et arrière du servomoteur.

Selon d'autres caractéristiques de l'invention :
- l'élément tubulaire est venu de matière avec la coupelle.
- l'élément tubulaire est emboîté dans la coupelle.
- la bague d'étanchéité est venue de matière avec la membrane d'étanchéité,
- la bague d'étanchéité comporte une partie d'extrémité, d'un diamètre supérieur au diamètre intérieur de l'élément tubulaire, qui est destinée à être introduite en se déformant dans le perçage de l'élément tubulaire du côté de la face déterminée de la coupelle, puis à faire saillie hors de l'élément tubulaire du côté opposé à la face déterminée pour immobiliser axialement la bague d'étanchéité,
- la partie d'extrémité de la bague d'étanchéité comporte un chanfrein qui est destiné à faciliter son introduction dans l'élément tubulaire,
- la face déterminée de la coupelle qui reçoit la membrane est la face arrière de ladite coupelle, l'élément tubulaire fait saillie axialement vers l'avant à partir de la face avant de la coupelle, et la partie d'extrémité de la bague d'étanchéité fait saillie à l'avant de l'élément tubulaire.

D'autres caractéristiques et avantages de l'invention apparaîtront à la lecture de la description détaillée qui suit pour la compréhension de laquelle on se reportera aux dessins annexés dans lesquels :
- la figure 1 est une vue d'ensemble en coupe d'un servomoteur réalisé conformément à l'état de la technique,
- la figure 2 est une vue en coupe de détail du servomoteur de la figure 1 représenté au voisinage de la bague d'étanchéité,
- la figure 3 est une vue en coupe de détail d'un servomoteur réalisé conformément à l'invention représenté au voisinage de la bague d'étanchéité.

Dans la description qui va suivre, des chiffres de référence identiques désignent des pièces identiques ou ayant des fonctions similaires.

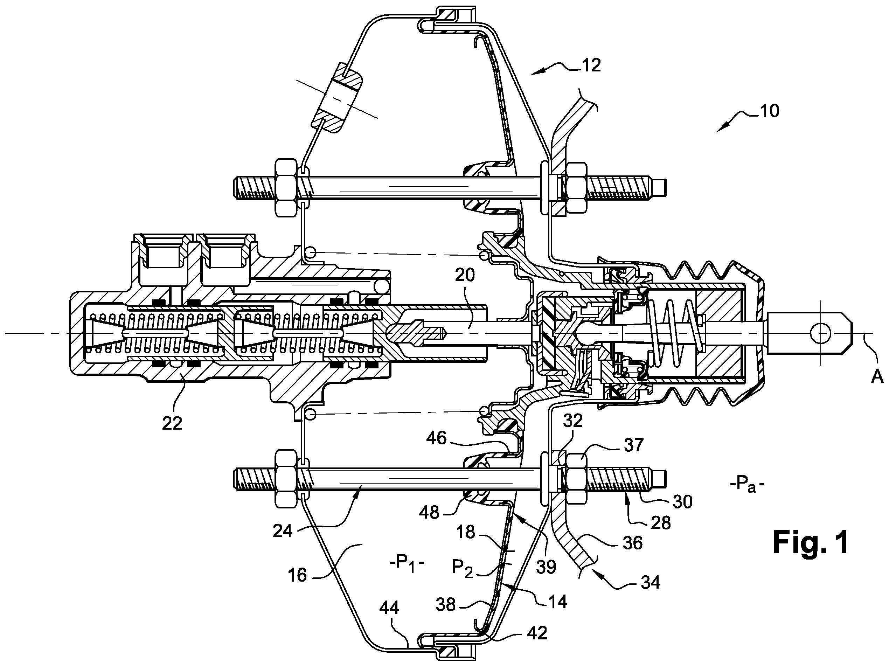

Par convention, les termes "avant", "arrière", supérieur", "inférieur" désignent respectivement des éléments ou des positions orientés respectivement vers la gauche, la droite, le haut, ou le bas des figures 1 à 3.

On a représenté à la figure 1 l'ensemble d'un servomoteur 10 pneumatique dit "à tirants" d'assistance au freinage pour un véhicule automobile.

De manière connue, le servomoteur 10 comporte une enveloppe 12 rigide d'orientation axiale "A" à l'intérieur de laquelle est montée mobile une cloison 14 sensiblement transversale délimitant de façon étanche une chambre avant 16, soumise à une première pression "P₁", et une chambre arrière 18, soumise à une deuxième pression "P₂" variant entre la première pression "P₁" et une pression "Pₐ" supérieure à la première pression "P₁". La deuxième pression "P₂" qui règne dans la chambre arrière 18 est notamment susceptible d'être modifiée par l'ouverture sélective de clapets dits "d'admission" et de "rééquilibrage" (non représentés) de manière à provoquer les déplacements de la cloison mobile 14, afin que ladite cloison mobile 14 sollicite une tige 20 d'actionnement d'un maître cylindre 22 associé au servomoteur 10.

Le fonctionnement d'un tel servomoteur 10 étant largement connu de l'état antérieur de la technique, il ne sera pas décrit outre mesure dans la présente description.

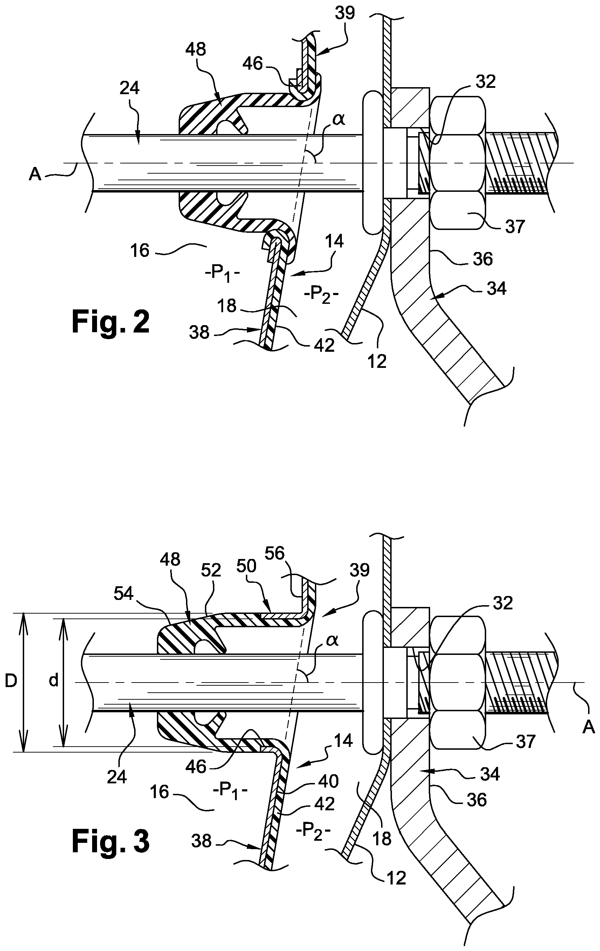

De manière connue, comme l'illustrent les figures 1 et 2, le servomoteur 10 est destiné à être fixé à un tablier 34 d'un véhicule associé par l'intermédiaire de tirants 24 d'orientation axiale qui traversent l'enveloppe 12 du servomoteur 10 et la cloison mobile 14. Les tirants sont par exemple solidaires de la partie avant de l'enveloppe 12 du servomoteur 12 et comportent à leur extrémité arrière 28 un filetage 30 destiné à traverser un perçage 32 d'un tablier 34 du véhicule pour permettre la fixation du servomoteur par l'intermédiaire d'écrous 37 serrés au dos 36 du tablier 34.

De manière connue, la cloison mobile 14 comporte au moins une coupelle 38 dont une partie annulaire 39 est inclinée d'un angle "α" déterminé par rapport à la direction axiale "A" de l'enveloppe 12.

Comme l'illustre plus précisément la figure 2, une face déterminée 40 de la coupelle 38 est recouverte d'une membrane 42 d'étanchéité qui, comme l'illustre la figure 1, est liée à la périphérie intérieure 44 de l'enveloppe 12. La coupelle 38 comporte un perçage 46 associé à chaque tirant 24, lequel perçage 46 reçoit une bague 48 d'étanchéité.

La bague 48 est d'une part fixée à la coupelle 38 et elle est d'autre part montée coulissante sur le tirant 24 associé.

Comme l'illustre la figure 2 qui représente un servomoteur 10 conventionnel, la coupelle 38 est, lors du fonctionnement du servomoteur 12, soumise à des efforts sensiblement perpendiculaires à la surface inclinée de ladite partie annulaire, alors que la bague 48 d'étanchéité présente une orientation radiale.

De ce fait, l'inclinaison de la partie annulaire 39 de la coupelle 38 peut conduire la bague 48 d'étanchéité à être soumise à des écarts de pression radiales assez élevés, ce qui peut provoquer un décollement local de la bague autour du tirant 24, et poser ainsi des problèmes d'étanchéité entre la chambre avant 16 et la chambre arrière 18 du servomoteur 10.

Pour remédier à cet inconvénient, l'invention propose un servomoteur comportant une bague 48 d'étanchéité renforcée.

Dans ce but, comme l'illustre la figure 3, l'invention propose un servomoteur 10 du type décrit précédemment, caractérisé en ce que la coupelle 38 comporte dans sa partie annulaire inclinée 39 un élément tubulaire 50, qui comporte le perçage 46, et qui s'étend au moins axialement en partie autour de la bague 48 d'étanchéité pour assurer une répartition plus uniforme des pressions autour de la bague 48 d'étanchéité et limiter les déformations de ladite bague 48 lorsqu'elle est soumise à une différence de pression entre la chambre avant 16 et la chambre arrière 18 du servomoteur 10.

Conformément à l'invention, deux modes de réalisation de l'élément tubulaire 50 peuvent être envisagés.

Selon un premier mode de réalisation de l'invention qui a été représenté à la figure 3, l'élément tubulaire 50 est venu de matière avec la coupelle 38. En pratique, la coupelle 38 peut ainsi être réalisée par emboutissage d'une tôle d'acier ou par moulage d'un matériau plastique.

Selon un second mode de réalisation de l'invention (non représenté), l'élément tubulaire 50 peut aussi être emboîté dans la coupelle 38. Dans ce cas des moyens d'emboîtement (non représentés) sont interposés entre l'élément tubulaire 50 et la coupelle 38.

D'une manière similaire au mode de réalisation précédent, la coupelle 38 peut être réalisée par emboutissage d'une tôle d'acier ou par moulage d'un matériau plastique, et l'élément tubulaire 50 peut être réalisé par découpe d'un tube d'acier ou par moulage d'un matériau plastique.

Dans ces deux modes de réalisation préférés de l'invention, la bague 48 d'étanchéité est réalisée de préférence venue de matière avec la membrane 42 d'étanchéité, ceci afin de garantir une étanchéité parfaite entre la bague 48 et la membrane 42, de manière à éviter d'éventuelles fuites d'air entre la chambre avant 16 et la chambre arrière 18.

Avantageusement, la bague 48 d'étanchéité comporte une partie d'extrémité 52, d'un diamètre "D" supérieur au diamètre "d" intérieur de l'élément tubulaire 50, qui est destinée, avant le montage du tirant 24, à être introduite en se déformant dans le perçage 46 de l'élément tubulaire du côté de la face 40 déterminée de la coupelle 38, puis à faire saillie hors de l'élément tubulaire 50 du côté opposé à la face 40 déterminée pour immobiliser axialement la bague 48 d'étanchéité.

Ainsi, une fois introduite, la partie d'extrémité 52 de la bague 48 forme une première butée contre l'extrémité de l'élément tubulaire 50.

Comme d'autre part la bague 48 est venue de matière avec la membrane 42 qui est appliquée contre la face 40 déterminée de la coupelle 38, la bague 48 se trouve alors immobilisée dans les deux sens de la direction axiale.

De préférence, la partie d'extrémité 52 de la bague d'étanchéité comporte un chanfrein 54 qui est destiné à faciliter son introduction dans l'élément tubulaire 50.

Tel que le servomoteur 10 a été représenté sur la figure 3, la face 40 déterminée de la coupelle 38 qui reçoit la membrane 42 est la face arrière de ladite coupelle 38, l'élément tubulaire 50 fait saillie axialement vers l'avant à partir de la face avant 56 de la coupelle 38, et la partie 52 d'extrémité de la bague 48 d'étanchéité fait saillie à l'avant de l'élément 50 tubulaire.

Cette configuration, particulièrement adaptée à un servomoteur 10 dans lequel la chambre avant 16 est soumise à une dépression moteur et dans lequel la chambre arrière 18 est soumise à une pression variant entre la pression atmosphérique et la dépression moteur, n'est toutefois pas limitative de l'invention, et pourrait être inversée dans le cas d'un servomoteur fonctionnant selon un principe différent, sans changer la nature de l'invention.

L'invention permet donc d'assurer une étanchéité optimale entre les chambres avant 16 et arrière 18 d'un servomoteur 10 à tirants.

## Revendications

1. Servomoteur (10) pneumatique d'assistance au freinage pour un véhicule automobile, dit servomoteur "à tirants", du type qui comporte une enveloppe (12) rigide d'orientation axiale (A) à l'intérieur de laquelle est montée mobile une cloison (14) sensiblement transversale délimitant de façon étanche une chambre avant (16), soumise à une première pression (P₁), et une chambre arrière (18), soumise à une deuxième pression (P₂) variant entre la première pression (P₁) et une pression (Pₐ) supérieure à la première pression (P₁), qui est susceptible de solliciter une tige (20) d'actionnement d'un maître cylindre associé au servomoteur (10), et dont les mouvements sont commandés par des clapets dits "d'admission" et de "rééquilibrage" permettant de faire varier la deuxième pression (P₂) dans la chambre arrière (18), du type dans lequel la cloison (14) mobile comporte au moins une coupelle (38) dont au moins une partie annulaire (39) est inclinée d'un angle (α) déterminé par rapport à la direction axiale (A) de l'enveloppe (12), dont une face déterminée (40) est recouverte d'une membrane (42) d'étanchéité liée à la périphérie intérieure de l'enveloppe (12), du type dans lequel le servomoteur (10) est destiné à être fixé à un tablier (34) d'un véhicule associé par l'intermédiaire de tirants (24) d'orientation axiale traversant l'enveloppe (12) du servomoteur (10) et la partie annulaire (39) de la cloison mobile (14), et du type dans lequel la coupelle (38) comporte un perçage (46) associé à chaque tirant (24) qui reçoit une bague (48) d'étanchéité qui est d'une part fixée à la coupelle (38) et qui est d'autre part montée coulissante sur le tirant (24) associé,
**caractérisé en ce que** la coupelle (38) comporte dans sa partie annulaire inclinée (39) un élément tubulaire (50), qui comporte le perçage (46), et qui s'étend au moins axialement en partie autour de la bague d'étanchéité (48) pour assurer une répartition plus uniforme des pressions autour de la bague d'étanchéité (48) et limiter les déformations de ladite bague (48) lorsqu'elle est soumise à une différence de pression entre les chambres avant (16) et arrière (18) du servomoteur (10).

2. Servomoteur (10) selon la revendication précédente, **caractérisé en ce que** l'élément tubulaire (50) est venu de matière avec la coupelle (38).

3. Servomoteur (10) selon la revendication 1, **caractérisé en ce que** l'élément tubulaire (50) est emboîté dans la coupelle (38).

4. Servomoteur (10) selon l'une des revendications précédentes, **caractérisé en ce que** la bague (48) d'étanchéité est venue de matière avec la membrane (42) d'étanchéité.

5. Servomoteur (10) selon la revendication précédente, **caractérisé en ce que** la bague (48) d'étanchéité comporte une partie d'extrémité (52), d'un diamètre (D) supérieur au diamètre intérieur (d) de l'élément tubulaire (50), qui est destinée à être introduite en se déformant dans le perçage (46) de l'élément tubulaire (50) du côté de la face (40) déterminée de la coupelle (38), puis à faire saillie hors de l'élément tubulaire (50) du côté opposé à la face déterminée (40) pour immobiliser axialement la bague d'étanchéité (48).

6. Servomoteur (10) selon la revendication précédente, **caractérisé en ce que** la partie d'extrémité (52) de la bague d'étanchéité (48) comporte un chanfrein (54) qui est destiné à faciliter son introduction dans l'élément tubulaire (50).

7. Servomoteur (10) selon l'une des revendications 5 ou 6, **caractérisé en ce que** la face (40) déterminée de la coupelle (38) qui reçoit la membrane (42) est la face arrière de ladite coupelle (38), **en ce que** l'élément tubulaire (50) fait saillie axialement vers l'avant à partir de la face avant (56) de la coupelle (38), et **en ce que** la partie d'extrémité (52) de la bague (48) d'étanchéité fait saillie à l'avant de l'élément tubulaire (50).

## Patentansprüche

1. Pneumatischer Bremskraftverstärker (10) für ein Kraftfahrzeug, Bremskraftverstärker "mit Zugstangen" genannt, der ein starres Gehäuse (12) von axialer Ausrichtung (A) umfasst, in dem beweglich eine im Wesentlichen quer verlaufende Zwischenwand (14) montiert ist, die dicht eine vordere Kammer (16), die einem ersten Druck (P₁) ausgesetzt ist, und eine hintere Kammer (18), die einem zweiten Druck (P₂) ausgesetzt ist, der zwischen dem ersten Druck (P₁) und einem Druck (Pₐ) über dem ersten Druck (P₁) variiert, begrenzt, die geeignet ist, eine Betätigungsstange (20) eines mit dem Bremskraftverstärker (10) verbundenen Hauptbremszylinders zu beaufschlagen, und deren Bewegungen durch so genannte "Einlass"-Klappen, und "Ausgleichs"-Klappen gesteuert werden, die es ermöglichen, den zweiten Druck (P₂) in der hinteren Kammer (18) variieren zu lassen, wobei die bewegliche Zwischenwand (14) mindestens eine Manschette (38) umfasst, von der mindestens ein ringförmiger Teil (39) um einen bestimmten Winkel (α) in Bezug auf die axiale Richtung (A) des Gehäuses (12) geneigt ist, von dem eine bestimmte Seite (40) mit einer Dichtungsmembran (42) bedeckt ist, die mit dem inneren Umfang des Gehäuses (12) verbunden ist, wobei der Bremskraftverstärker (10) dazu bestimmt ist, an einer Spritzwand (34) eines Fahrzeugs befestigt zu werden, und über axial ausgerichtete Zugstangen (24) verbunden wird, die das Gehäuse (12) des Bremskraftverstärkers (10) und den ringförmigen Teil (39) der beweglichen Zwischenwand (14) durchqueren, und wobei die Manschette (38) eine zu jeder Zugstange (24) gehörende Bohrung (46) umfasst, die einen Dichtungsring (48) aufnimmt, der einerseits an der Manschette (38) befestigt ist und der andererseits gleitend auf der zugehörigen Zugstange (24) montiert ist,
**dadurch gekennzeichnet, dass** die Manschette (38) in ihrem geneigten ringförmigen Teil (39) ein rohrförmiges Element (50) umfasst, das die Bohrung (46) umfasst und das sich mindestens axial teilweise um den Dichtungsring (48) erstreckt, um eine gleichmäßigere Verteilung der Drücke um den Dichtungsring (48) herum sicherzustellen und die Verformungen des Rings (48) zu begrenzen, wenn er einer Druckdifferenz zwischen der vorderen Kammer (16) und der hinteren Kammer (18) des Bremskraftverstärkers (10) ausgesetzt ist.

2. Bremskraftverstärker (10) nach dem vorhergehenden Anspruch, **dadurch gekennzeichnet, dass** das rohrförmige Element (50) einstückig mit der Manschette (38) ausgebildet ist.

3. Bremskraftverstärker (10) nach Anspruch 1, **dadurch gekennzeichnet, dass** das rohrförmige Element (50) in die Manschette (38) eingepasst ist.

4. Bremskraftverstärker (10) nach einem der vorhergehenden Ansprüche, **dadurch gekennzeichnet, dass** der Dichtungsring (48) einstückig mit der Dichtungsmembran (42) ausgebildet ist.

5. Bremskraftverstärker (10) nach dem vorhergehenden Anspruch, **dadurch gekennzeichnet, dass** der Dichtungsring (48) ein Endstück (52) mit einem Durchmesser (D) umfasst, der größer als der Innendurchmesser (d) des rohrförmigen Bauteils (50) ist, das dazu bestimmt ist, unter Verformung in die Bohrung (46) des rohrförmigen Elements (50) von der bestimmten Seite (40) der Manschette (38) aus eingeführt zu werden und dann auf der der bestimmten Seite (40) entgegengesetzten Seite aus dem rohrförmigen Element (50) herauszuragen, um den Dichtungsring (48) axial festzuhalten.

6. Bremskraftverstärker (10) nach dem vorhergehenden Anspruch, **dadurch gekennzeichnet, dass** das Endstück (52) des Dichtungsrings (48) eine Fase (54) umfasst, die dazu dient, sein Einführen in das rohrförmige Element (50) zu erleichtern.

7. Bremskraftverstärker (10) nach einem der Ansprüche 5 oder 6, **dadurch gekennzeichnet, dass** die bestimmte Seite (40) der Manschette (38), die die Membran (42) aufnimmt, die Rückseite der Manschette (38) ist, dass das rohrförmige Element (50) von der Vorderseite (56) der Manschette (38) an axial nach vorne herausragt und dass das Endstück (52) des Dichtungsrings (48) an der Vorderseite des rohrförmigen Elements (50) herausragt.

## Claims

1. Tie rod-type pneumatic brake booster (10) for a motor vehicle, of the type which comprises a rigid casing (12) of axial orientation (A) inside which is movably mounted a substantially transverse partition (14) sealingly delimiting a front chamber (16), subjected to a first pressure (P₁), and a rear chamber (18), subjected to a second pressure (P₂) varying between the first pressure (P₁) and a pressure (Pₐ) above the first pressure (P₁), which is able to act on an actuating rod (20) of a master cylinder associated with the booster (10), and the movements of which are controlled by intake and equalizing valves for varying the second pressure (P₂) in the rear chamber (18), of the type in which the moving partition (14) comprises at least one cup (38) of which at least an annular portion (39) is inclined by a defined angle (α) with respect to the axial direction (A) of the casing (12), and of which a defined face (40) is covered by a sealing diaphragm (42) connected to the inner periphery of the casing (12), of the type in which the booster (10) is intended to be fastened to a bulkhead (34) of an associated vehicle by way of tie rods (24) of axial orientation passing through the casing (12) of the booster (10) and through the annular portion (39) of the moving partition (14), and of the type in which the cup (38) has an aperture (46) associated with each tie rod (24) that accommodates a sealing ring (48) which is, on the one hand, fastened to the cup (38) and which is, on the other hand, slideably mounted on the associated tie rod (24), **characterized in that** the cup (38) comprises, in its inclined annular portion (39), a tubular element (50) which contains the aperture (46) and which extends at least axially in part around the sealing ring (48) so as to ensure more uniform distribution of the pressures around the sealing ring (48) and limit the deformations of said ring (48) when it is subjected to a pressure difference between the front chamber (16) and rear chamber (18) of the booster (10).

2. Booster (10) according to the preceding claim, **characterized in that** the tubular element (50) is integrally formed with the cup (38).

3. Booster (10) according to Claim 1, **characterized in that** the tubular element (50) is fitted into the cup (38).

4. Booster (10) according to one of the preceding claims, **characterized in that** the sealing ring (48) is integrally formed with the sealing diaphragm (42).

5. Booster (10) according to the preceding claim, **characterized in that** the sealing ring (48) comprises an end portion (52), with a diameter (D) greater than the inside diameter (d) of the tubular element (50), which is intended to be inserted with deformation into the aperture (46) in the tubular element (50) from the side toward the defined face (40) of the cup (38) and then to project from the tubular element (50) on the side opposed to the defined face (40) in order to axially immobilize the sealing ring (48).

6. Booster (10) according to the preceding claim, **characterized in that** the end portion (52) of the sealing ring (48) comprises a chamfer (54) which is intended to facilitate its insertion into the tubular element (50).

7. Booster (10) according to either of Claims 5 and 6, **characterized in that** the defined face (40) of the cup (38) which receives the diaphragm (42) is the rear face of said cup (38), **in that** the tubular element (50) protrudes axially toward the front from the front face (56) of the cup (38), and **in that** the end portion (52) of the sealing ring (48) projects at the front of the tubular element (50).
